# EUROPEAN PATENT APPLICATION

(11) **EP 2 784 915 A2**
(43) Date of publication of application: **01.10.2014**
(21) Application number: 14161578.1
(22) Date of filing: 25.03.2014
(51) Int. Cl.: H02K 7/116

(54) **Rotating Electric Machine**

(30) Priority: 25.03.2013 JP 2013061997
(71) Applicant: KABUSHIKI KAISHA TOYOTA JIDOSHOKKI, Kariya-shi, Aichi-ken 448-8671 (JP)
(72) Inventor: Fukuyama, Ryosuke, Kariya-shi, Aichi-ken,, 448-8671 (JP); Umeyama, Ryo, Kariya-shi, Aichi-ken,, 448-8671 (JP); Kagami, Masanao, Kariya-shi, Aichi-ken,, 448-8671 (JP); Yamada, Kazuho, Kariya-shi, Aichi-ken,, 448-8671 (JP)
(74) Representative: Winter, Brandl, Fürniss, Hübner, Röss, Kaiser, Polte - Partnerschaft mbB

(57) **Abstract**

A rotating electric machine 100 includes a rotor 3 having a cylindrical peripheral wall 3aa having permanent magnets 4 arranged circumferentially therein, and a stator 2 provided on an outer side of the peripheral wall 3aa of the rotor 3. Further, the rotating electric machine 100 includes planetary rollers 6 provided in a planetary roller mechanism chamber 3d on an inner side of the peripheral wall 3aa so as to be rotated by a rotation of the rotor 3 transmitted from the peripheral wall 3aa to outer peripheral surfaces 6aa of planetary rollers 6, an output shaft 9 provided on the inner side of the peripheral wall 3aa so as to be rotated by a rotation of the planetary rollers 6 transmitted to the output shaft 9 via the outer peripheral surface 6aa, and magnetic oil 20 included in the inner side of the peripheral wall 3aa.

## Description

### BACKGROUND OF THE INVENTION

### Field of the Invention

The present invention relates to a rotating electric machine.

### Description of the Related Art

A rotating electric machine may include a mechanism that outputs by increasing or reducing the rotation of a rotor. Japanese Patent Application Laid Open No. 2003-143805, for example, describes a rotating electric machine including a planetary roller mechanism for increasing the rotating speed of a rotor. In this rotating electric machine, a stator core is fixed to the interior of a cylindrical casing, a cylindrical rotor having magnets set therein is disposed to face the inner side of the stator core, and a power transmission shaft for outputting the power of the rotor to the outside is provided in the axial center position of the rotor. Further, a cylindrical sun roller is mounted coaxially on the power transmission shaft on the inner side of the rotor so as to rotate integrally with the power transmission shaft, and a cylindrical ring roller is mounted coaxially on the inner peripheral surface of the rotor so as to rotate integrally therewith. A plurality of planetary rollers are disposed between the sun roller and the ring roller, and the planetary rollers are in rolling contact with the sun roller and the ring roller. Further, the planetary rollers are fixed to the casing so as not to revolve around the sun roller relative to the casing.

Thus, the rotating force of the rotor is input into the ring roller rotating integrally therewith and then transmitted to the planetary rollers that are in rolling contact with the ring roller, thereby causing the planetary rollers to be rotated. Further, the rotating force of the planetary rollers is transmitted to the sun roller with which the planetary rollers are in rolling contact, thereby causing the sun roller to be rotated, and is then output to the power transmission shaft that rotates together with the sun roller. In this operation, since the rotation of the ring roller is transmitted to the sun roller, which has an outer diameter that is smaller than the inner diameter of the ring roller, the sun roller is rotationally driven at a higher speed than the ring roller and the rotor.

Furthermore, in the above rotating electric machine, lubricating oil is included inside the rotor. Hence, in this rotating electric machine, viscous friction generated by the viscosity of the oil infiltrating gaps between the respective rollers is used in addition to friction generated by the rolling contact between the respective rollers in order to transmit power between the ring roller, the planetary rollers and the sun roller.

In the rotating electric machine described in Japanese Patent Application Laid Open No. 2003-143805, the oil must be included such that contact surfaces of the planetary rollers contacting with the other rollers are in constant contact with the oil, and therefore the amount of oil to be included increases. Particularly in a rotating electric machine which may be used in various orientations, an amount of oil that ensures that the contact surfaces of the planetary rollers are completely submerged in the oil at all times is required. The temperature of the large amount of oil included inside the rotor is increased by the respective rotating rollers agitating the oil and as a result, the durability of the seals provided for preventing oil leakage from the inside of the rotor to the outside decreases. Further, when the oil is agitated by the respective rollers and the temperature of the oil increases, the viscous friction generated by the oil decreases, leading to a reduction in the power transmission performance of the planetary roller mechanism.

### SUMMARY OF THE INVENTION

The present invention has been made to solve the above problems, and an object thereof is to provide a rotating electric machine including a planetary roller mechanism, in which the amount of lubricating oil required can be reduced.

To solve the problems described above, a rotating electric machine according to the present invention includes: a rotor having a cylindrical peripheral wall having a permanent magnet arranged circumferentially therein with a planetary roller mechanism chamber sealed on an inner periphery of the peripheral wall; a stator provided on an outer side of the peripheral wall of the rotor; a planetary roller provided in the planetary roller mechanism chamber so as to be rotated by a rotation of the rotor being transmitted from the peripheral wall to a planetary roller surface of the planetary roller; an output shaft provided in the planetary roller mechanism chamber so as to be rotated by a rotation of the planetary roller being transmitted to the output shaft via the planetary roller surface; and magnetic lubricating oil included in the planetary roller mechanism chamber.

### BRIEF DESCRIPTION OF THE DRAWINGS

Fig. 1 is a schematic sectional side view showing a construction of a rotating electric machine according to an embodiment of the present invention; and
Fig. 2 is a sectional view taken along line II-II in Fig. 1.

### DESCRIPTION OF THE PREFERRED EMBODIMENTS

A rotating electric machine 100 according to an embodiment of the present invention will be described below on the basis of the appended drawings.

First, construction of the rotating electric machine 100 will be described.

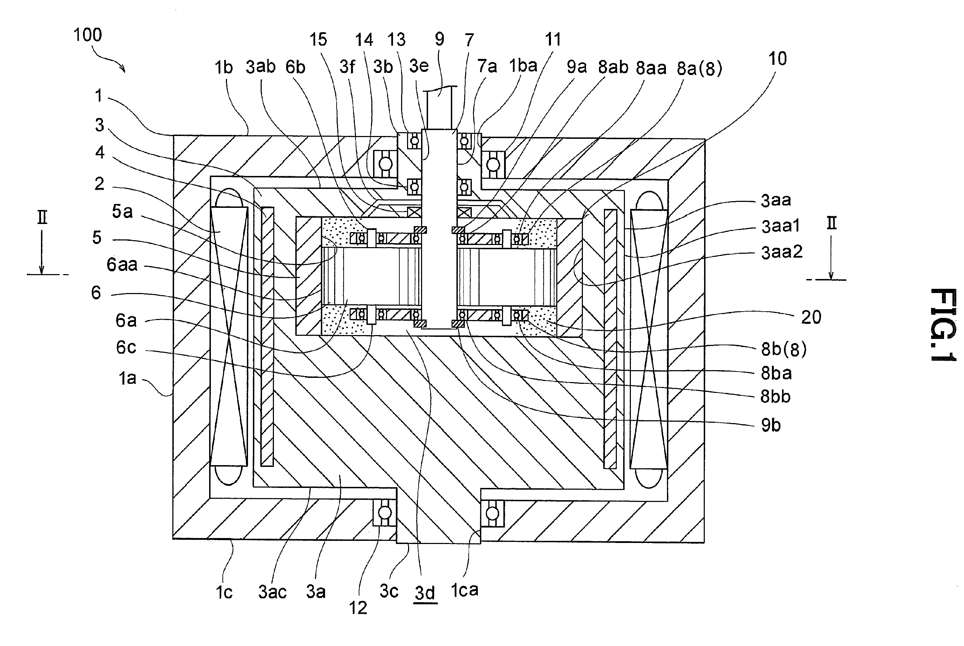

Referring to Fig. 1, the rotating electric machine 100 includes a cylinder-shaped casing 1 with a closed end. The casing 1 includes a cylindrical peripheral wall 1a, and end walls 1b and 1c closing respective ends of the peripheral wall 1a. Through holes 1ba and 1ca are formed in respective centers of the end walls 1b and 1c.

Further, the rotating electric machine 100 includes a cylindrical stator 2 provided around an inner surface of the peripheral wall 1a in the casing 1. The stator 2 is fixed to the peripheral wall 1a and includes a coil that circumferentially extends along the peripheral wall 1a. The stator 2 constitutes the stator.

The rotating electric machine 100 also includes a substantially cylindrical rotor 3 provided on an inner side of the stator 2 in the casing 1. The rotor 3 includes a cylinder-shaped main body 3a with a closed end, and shaft portions 3b and 3c projecting from respective ends 3ab and 3ac of the main body 3a. The shaft portions 3b and 3c are disposed coaxially with the main body 3a.

The rotor 3 is disposed such that an outer peripheral surface 3aa1 of a cylindrical peripheral wall 3aa of the main body 3a is opposed to an inner peripheral side of the stator 2. The shaft portions 3b and 3c respectively extend through the through holes 1ba and 1ca in the casing 1, and are rotatably supported by bearings 11 and 12 provided in the through holes 1ba and 1ca, respectively.

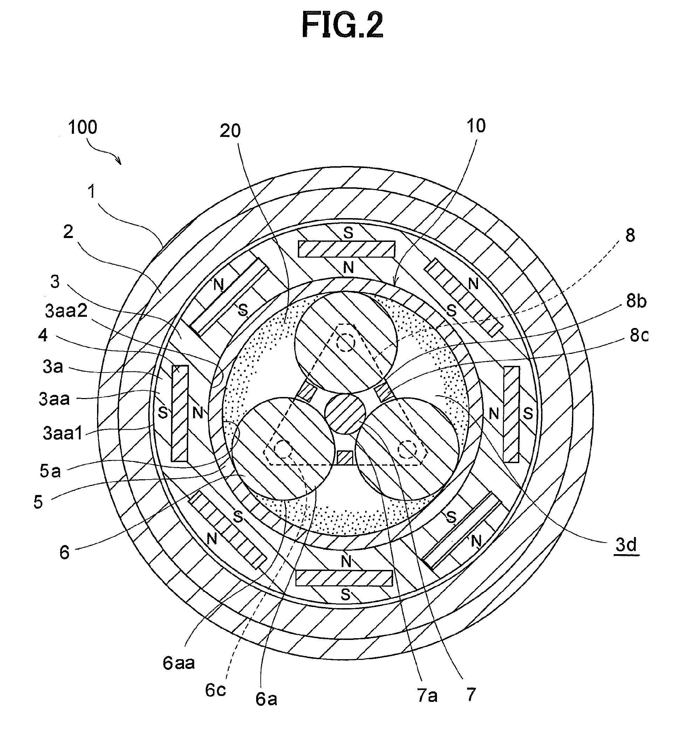

The rotor 3 also includes a plurality of permanent magnets 4 provided in an interior of the peripheral wall 3aa of the main body 3a. The permanent magnets 4 are circumferentially arranged in the vicinity of the outer peripheral surface 3aa1 of the peripheral wall 3aa, and disposed to be opposed to the stator 2 (see Fig. 2).

Referring to Figs. 1 and 2 together, the rotor 3 includes a planetary roller mechanism chamber 3d, which is constituted by a columnar space, in the main body 3a. The planetary roller mechanism chamber 3d is surrounded by the peripheral wall 3aa and the ends 3ab and 3ac of the main body 3a. A cylindrical ring roller 5 is provided in the planetary roller mechanism chamber 3d. The ring roller 5 is disposed such that an outer peripheral surface thereof is fitted to an inner peripheral surface 3aa2 of the peripheral wall 3aa which is opposed to a cylindrical outer peripheral surface of the planetary roller mechanism chamber 3d. Thus, the ring roller 5 is configured to be rotatable integrally with the rotor 3.

Furthermore, a bearing hole 3e is formed in the rotor 3. The bearing hole 3e extends from the planetary roller mechanism chamber 3d through the end 3ab of the main body 3a and the shaft portion 3b so as to open to the outside. The bearing hole 3e is disposed coaxially with the main body 3a and the shaft portions 3b and 3c. A cylindrical sun roller 7 having a smaller diameter than the ring roller 5 is inserted into the bearing hole 3e. The sun roller 7 extends into the planetary roller mechanism chamber 3d, and is supported to be rotatable about an axial center thereof by bearings 13 and 14 provided in the bearing hole 3e. The bearing 14 is disposed between the planetary roller mechanism chamber 3d and the bearing 13. Further, an output shaft 9 is inserted coaxially into and fitted to the sun roller 7, whereby the sun roller 7 and the output shaft 9 are capable of rotating integrally about the axial center thereof.

An annular sealing material 15 is provided in the bearing hole 3e between the planetary roller mechanism chamber 3d and the bearing 14. The sealing material 15 fluid-tightly seals between the rotor 3 and the sun roller 7 to close the planetary roller mechanism chamber 3d. A plurality of oil return passages 3f communicating the bearing hole 3e with the planetary roller mechanism chamber 3d are formed in the end 3ab of the main body 3a of the rotor 3. The oil return passages 3f open onto the bearing hole 3e between the sealing material 15 and the bearing 14. Further, from the bearing hole 3e through the end 3ab, the oil return passages 3f extend radially in radial directions of the bearing hole 3e and then change the directions thereof and thereafter open onto an end 3ab side surface of the planetary roller mechanism chamber 3d. The oil return passages 3f are passages for returning fluid, which has leaked out of the planetary roller mechanism chamber 3d and passed through the sealing material 15 along the sun roller 7, to the planetary roller mechanism chamber 3d.

A plurality of planetary rollers (three in this embodiment) 6 are provided between the ring roller 5 and the sun roller 7 in the planetary roller mechanism chamber 3d. Each planetary roller 6 includes a columnar roller main body 6a, and roller shaft portions 6b and 6c projecting from respective ends of the roller main body 6a. The roller shaft portions 6b and 6c are disposed coaxially with the roller main body 6a. The planetary rollers 6 are disposed at intervals around an outer periphery of the sun roller 7 such that an axial direction of the roller shaft portions 6b and 6c is parallel with an axial direction of the ring roller 5 and the sun roller 7. An outer peripheral surface 6aa of the roller main body 6a of each planetary roller 6 is in rolling contact with an inner peripheral surface 5a of the ring roller 5 and an outer peripheral surface 7a of the sun roller 7. Further, each planetary roller 6 is disposed such that the outer peripheral surface 6aa thereof is opposed to the permanent magnets 4.

Here, the inner peripheral surface 5a of the ring roller 5 constitutes the ring roller surface, the outer peripheral surface 6aa of the planetary roller 6 constitutes the planetary roller surface, and the outer peripheral surface 7a of the sun roller 7 constitutes the sun roller surface.

The three planetary rollers 6 are held in position by a holding member 8 provided in the planetary roller mechanism chamber 3d. The holding member 8 includes holding plates 8a and 8b that are disposed opposite respective ends of the roller main body 6a of each planetary roller 6, and a connecting member 8c that connects the holding plates 8a and 8b to each other. The holding plates 8a and 8b rotatably support the roller shaft portions 6b and 6c of each planetary roller 6 by means of bearings 8aa and 8ba embedded respectively therein. Further, the holding plates 8a and 8b each include a through hole penetrated by the sun roller 7, whereby the holding plates 8a and 8b are capable of rotating freely relative to the sun roller 7 in the circumferential direction via bearings 8ab and 8bb which are provided respectively in the through holes. Furthermore, the holding plates 8a and 8b are sandwiched in the axial direction by fixing rings 9a and 9b that are fitted to the outer peripheral surface 7a of the sun roller 7. Thereby, the holding plates 8a and 8b are fixed with respect to the sun roller 7 in the axial direction. Note that in this embodiment, the holding member 8 is not fixed to the rotor 3 and is rotatable relative to the rotor 3 and the sun roller 7.

The ring roller 5, the planetary rollers 6, the sun roller 7 and the holding member 8 together constitute a planetary roller mechanism 10.

Magnetic lubricating oil 20 as a magnetic fluid is included in the planetary roller mechanism chamber 3d of the rotor 3. The magnetic oil 20 is a colloidal solution that is formed by intermixing ferromagnetic fine particles having surfactant-covered surfaces into oil serving as a base fluid. The ferromagnetic fine particles in the oil are maintained in a stably dispersed condition by actions of affinity between the surfactant and the oil and repulsion between the surfactant-covered surfaces of the fine particles. Magnetite, manganese-zinc ferrite, and so on may be used as a magnetic material composing the ferromagnetic fine particles. In the planetary roller mechanism chamber 3d, the oil and the ferromagnetic fine particles of the magnetic oil 20 are integrally attracted by the permanent magnets 4 such that the magnetic oil 20 exists disproportionately near the ring roller 5.

Next, operation of the rotating electric machine 100 will be described.

Referring to Figs. 1 and 2 together, when alternating current power is applied to the stator 2 in the rotating electric machine 100, the coil of the stator 2 generates a rotating magnetic field. When the permanent magnets 4 of the rotor 3 receive an action of the rotating magnetic field, the rotor 3 is rotationally driven about the axial center of the shaft portions 3b and 3c thereof. The ring roller 5 is rotated together with the rotor 3, causing the respective planetary rollers 6 in rolling contact with the inner peripheral surface 5a of the ring roller 5 to be rotated.

In this operation, the magnetic oil 20 is attracted toward the ring roller 5 by the magnetic force of the permanent magnets 4, and as a result, the attracted magnetic oil 20 infiltrates gaps between the ring roller 5 and the planetary rollers 6, thereby providing lubrication between the ring roller 5 and the planetary rollers 6. The magnetic oil 20 improves its performance in transmitting the rotating force between the rollers by increasing frictional force therebetween by means of the action of the viscous friction force of the magnetic oil 20 and the action of the surface friction force of the magnetic oil 20, which increases due to resistance provided by the ferromagnetic fine particles. Namely, the magnetic oil 20 improves its performance as a traction oil. Hence, the rotating force of the ring roller 5 is transmitted to the planetary rollers 6 by the frictional force generated by the rolling contact between the planetary rollers 6 and the ring roller 5 and the frictional force generated by the magnetic oil 20, with the result that the planetary rollers 6 are rotationally driven so as to roll around the inner peripheral surface 5a of the ring roller 5.

When the planetary rollers 6 are rotated, the sun roller 7 that is in rolling contact with the planetary rollers 6 is rotated. In this operation, the magnetic oil 20 adhered to the outer peripheral surfaces 6aa of the planetary rollers 6 is carried by the rotating outer peripheral surfaces 6aa so as to infiltrate gaps between the planetary rollers 6 and the sun roller 7 and thereby provide lubrication between the planetary rollers 6 and the sun roller 7. The rotating force of the planetary rollers 6 is transmitted to the sun roller 7 by the frictional force generated by the magnetic oil 20 and the frictional force generated by the rolling contact between the sun roller 7 and the planetary rollers 6, and as a result, the sun roller 7 is driven to rotate together with the outer peripheral surfaces 6aa of the planetary rollers 6.

Note that the magnetic oil 20 adhered to the outer peripheral surface 7a of the sun roller 7 may move on the outer peripheral surface 7a in the axial direction, but leakage of the magnetic oil 20 from the planetary roller mechanism chamber 3d to the outside is substantially prevented by the sealing material 15. Even when the magnetic oil 20 permeates the periphery of the sealing material 15 so as to leak out of the planetary roller mechanism chamber 3d, the leaked magnetic oil 20 is attracted by the magnetic force of the permanent magnets 4, and is therefore returned to the planetary roller mechanism chamber 3d through the oil return passages 3f.

Further, the holding member 8 holding the three planetary rollers 6 is capable of rotating relative to the ring roller 5 and the sun roller 7, and therefore the three planetary rollers 6 revolve integrally around the sun roller 7 while the respective planetary rollers 6 rotate about the roller shaft portions 6b and 6c. Hence, the amount by which the outer peripheral surface 7a of the sun roller 7 moves in a rotation direction takes a value obtained by subtracting the amount by which the revolving planetary rollers 6 move on the outer peripheral surface 7a of the sun roller 7 from the amount by which the inner peripheral surface 5a of the ring roller 5 moves in the rotation direction. The outer diameter of the outer peripheral surface 7a of the sun roller 7 is smaller than the inner diameter of the inner peripheral surface 5a of the ring roller 5 only by the associated outer diameters of the planetary rollers 6, and is therefore quite small. Hence, the sun roller 7 is rotated at a higher rotating speed than the ring roller 5. Note that the rate of increase in the rotating speed of the sun roller 7 can be changed by changing the ratio between the inner diameter of the ring roller 5 and the outer diameter of the sun roller 7.

Also, the rate of increase in the rotating speed of the sun roller 7 can be further increased when the holding member 8 is fixed to the rotor 3 so as not to rotate relative to the rotor 3, thereby preventing the planetary rollers 6 from revolving.

As described above, when the magnetic oil 20 is included in the planetary roller mechanism chamber 3d in such a sufficient amount that the magnetic oil 20 attracted by the permanent magnets 4 can provide lubrication between the ring roller 5 and the planetary rollers 6, the magnetic oil 20 can sufficiently serve as both a lubricating oil and traction oil. Moreover, since the magnetic oil 20 adheres to the ring roller 5 and rotationally moves together with the ring roller 5, the magnetic oil 20 can perform a lubricating action and a traction action on all of the planetary rollers 6 even when the magnetic oil 20 is provided in an amount only sufficient to provide lubrication between a single planetary roller 6 and the ring roller 5.

As noted above, the rotating electric machine 100 according to this embodiment of the present invention includes the rotor 3 having the cylindrical peripheral wall 3aa including the permanent magnets 4 arranged circumferentially and the enclosed planetary roller mechanism chamber 3d being formed on an inner periphery of the peripheral wall 3aa, and the stator 2 provided on an outer side of the peripheral wall 3aa of the rotor 3. Further, the rotating electric machine 100 includes, within the planetary roller mechanism chamber 3d, the planetary rollers 6 that are rotated by the rotation of the rotor 3 being transmitted from the peripheral wall 3aa to the outer peripheral surfaces 6aa of the planetary rollers 6, the output shaft 9 that is rotated by the rotation of the planetary rollers 6 being transmitted to the output shaft 9 via the outer peripheral surfaces 6aa, and the magnetic oil 20.

In this construction, the magnetic oil 20 is attracted toward the peripheral wall 3aa of the rotor 3 by the magnetic force of the permanent magnets 4. Further, the magnetic oil 20 attracted toward the peripheral wall 3aa adheres easily to the outer peripheral surfaces 6aa of the planetary rollers 6 to which the rotation of the rotor 3 is transmitted from the peripheral wall 3aa. Moreover, the magnetic oil 20 adhered to the outer peripheral surfaces 6aa moves together with the rotation of the planetary rollers 6, and is therefore capable of lubricating the entire outer peripheral surfaces 6aa of the planetary rollers 6. Hence, the required amount of the magnetic oil 20 can be set at a sufficient amount for the attracted magnetic oil 20 to adhere to the outer peripheral surfaces 6aa of the planetary rollers 6, and therefore the required amount can be reduced. Accordingly, a reduction in the durability of the sealing material 15, which is caused by an increase in the temperature of the oil by the ring roller 5, the planetary rollers 6 and the sun roller 7 agitating the oil, can be suppressed. Also, a reduction in the power transmitting performance of the planetary roller mechanism 10, which is caused due to a reduction in the oil viscous friction by the ring roller 5, the planetary rollers 6 and the sun roller 7 agitating the oil to increase the temperature of the oil, can be suppressed.

In addition, in the rotating electric machine 100, the rotor 3 includes the planetary roller mechanism chamber 3d, which is a closed space, on the inner side of the peripheral wall 3aa. Moreover, the planetary rollers 6 and the sun roller 7, which includes the outer peripheral surface 7a serving as a sun roller surface that is in rolling contact with the outer peripheral surfaces 6aa of the planetary rollers 6, are disposed in the planetary roller mechanism chamber 3d. The sun roller 7 is rotatable integrally with the output shaft 9. The rotating electric machine 100 also includes the ring roller 5 in the planetary roller mechanism chamber 3d. The ring roller 5 is fixed to the peripheral wall 3aa of the rotor 3 to rotate integrally therewith, and includes the inner peripheral surface 5a serving as a ring roller surface with which the outer peripheral surfaces 6aa of the planetary rollers 6 are in rolling contact.

In the above construction, since the ring roller 5, the planetary rollers 6 and the sun roller 7 are housed in the planetary roller mechanism chamber 3d which is a closed space, the magnetic oil 20 may also be included in the planetary roller mechanism chamber 3d. Hence, a reduction in the magnetic oil 20 due to leakage to the outside can be suppressed, and therefore the amount of the magnetic oil 20 to be required in the planetary roller mechanism chamber 3d can be reduced. Furthermore, by disposing the ring roller 5, the planetary rollers 6 and the sun roller 7 to be in rolling contact as described above, the planetary roller mechanism 10 constituted by the ring roller 5, the planetary rollers 6 and the sun roller 7 can be reduced in size.

Further, in the rotating electric machine 100, the plurality of planetary rollers 6 are provided around the outer peripheral surface 7a of the sun roller 7, and the plurality of planetary rollers 6 are positioned between the outer peripheral surface 7a and the inner peripheral surface 5a of the ring roller 5. Furthermore, the plurality of planetary rollers 6 are held by the holding member 8, which is provided in the planetary roller mechanism chamber 3d to be rotatable relative to the sun roller 7. In this construction, since the sun roller 7 is radially supported by the plurality of planetary rollers 6 and the ring roller 5 on the outer side of the planetary rollers 6, axial deviation of the sun roller 7 while rotating can be suppressed. Moreover, since the respective planetary rollers 6 are held by the holding member 8, all of the planetary rollers 6 perform a synchronous motion. Hence, rotational transmission from the ring roller 5 to the planetary rollers 6 and rotational transmission from the planetary rollers 6 to the sun roller 7 is performed smoothly such that the respective rollers rotate smoothly. By ensuring that the respective rollers operate smoothly, as described above, the magnetic oil 20 can be supplied to respective parts evenly, and as a result, lubrication and power transmission in the respective parts can be performed evenly.

In the rotating electric machine 100 according to this embodiment, the ring roller 5 is provided in the rotor 3, but the present invention is not limited thereto, and as long as sufficient strength and wear resistance are secured on the peripheral wall 3aa of the rotor 3, the planetary rollers 6 may contact the peripheral wall 3aa directly.

In the rotating electric machine 100 according to this embodiment, the sun roller 7 and the output shaft 9 are separate members, but the present invention is not limited thereto, and instead the sun roller 7 may serve as the output shaft 9. Alternatively, as long as sufficient strength and wear resistance are secured, the output shaft 9 may serve as the sun roller 7.

In the rotating electric machine 100 according to this embodiment, three planetary rollers 6 are provided, but the present invention is not limited thereto, and one, two, four, or more planetary rollers 6 may be provided.

In the rotating electric machine 100 according to this embodiment, a permanent magnet may be embedded in the vicinity of the outer peripheral surface 6aa of the planetary roller 6. In so doing, scattering and falling off of the magnetic oil 20 adhered to the outer peripheral surface 6aa of the planetary roller 6 can be suppressed, enabling a greater reduction in the amount of the magnetic oil 20 required.

## Claims

1. A rotating electric machine (100) that comprises: a rotor (3) including a cylindrical peripheral wall (3aa) having a permanent magnet (4) arranged circumferentially therein with a planetary roller mechanism chamber (3d) formed in the inner periphery of the peripheral wall (3aa) and sealed therein; and a stator (2) provided on an outer side of the peripheral wall (3aa) of the rotor (3), the rotating electric machine (100) further comprising:
a planetary roller (6) provided in the planetary roller mechanism chamber (3d) so as to be rotated by a rotation of the rotor (3) being transmitted from the peripheral wall (3aa) to a planetary roller surface (6aa) of the planetary roller (6);
an output shaft (9) provided in the planetary roller mechanism chamber (3d) so as to be rotated by a rotation of the planetary roller (6) being transmitted to the output shaft (9) via the planetary roller surface (6aa); and
magnetic lubricating oil (20) included in the planetary roller mechanism chamber (3d).

2. A rotating electric machine (100) according to claim 1, further comprising a sun roller (7) having a sun roller surface (7a) that is in rolling contact with the planetary roller surface (6aa), and
wherein the sun roller (7) is rotatable integrally with the output shaft (9).

3. A rotating electric machine (100) according to claim 2, further comprising a ring roller (5) in the planetary roller mechanism chamber (3d), wherein the ring roller (5) is fixed to the peripheral wall (3aa) to rotate integrally therewith and includes a ring roller surface (5a) with which the planetary roller surface (6aa) of the planetary roller (6) is in rolling contact.
